# EUROPEAN PATENT APPLICATION

(11) **EP 3 432 481 A1**
(43) Date of publication of application: **23.01.2019**
(21) Application number: 17766647.6
(22) Date of filing: 14.03.2017
(51) Int. Cl.: H04B 3/44, H02J 1/00, H02J 1/14

(54) **SUBMARINE DEVICE, SUBMARINE CABLE SYSTEM, METHOD FOR CONTROLLING SUBMARINE DEVICE, AND STORAGE MEDIUM FOR STORING PROGRAM FOR SUBMARINE DEVICE**

(30) Priority: 18.03.2016 JP 2016055019
(71) Applicant: NEC Corporation, Tokyo 108-8001 (JP)
(72) Inventor: ARAI, Narihiro, Tokyo 108-8001 (JP)
(74) Representative: Reeve, Nicholas Edward
(86) International application number: PCT/JP2017/010072
(87) International publication number: WO 2017/159648

(57) **Abstract**

[Problem] To provide a submarine device capable of obtaining a constant voltage despite fluctuations in power supply load without making the device large or complicated, as well as a submarine cable system, a method for controlling the submarine device, and a program for the submarine device.

[Solution] Provided is a submarine device that is characterized by being provided with: drive voltage generation means for generating voltages for driving connected loads according to current flows; a detection means for detecting whether or not each of the loads is connected to the submarine device; and a control means that performs control such that currents flow or do not flow in the drive voltage generation means according to a detection result of the detection means, wherein the submarine device is characterized in that the drive voltage generation means are prepared according to the respective loads, the detection means detects whether or not each of the loads is connected, and the control means performs control so that a current flows or does not flow in each of the drive voltage generation means according to each of the loads according to a detection result from the detection means as to whether each of the loads is connected.

## Description

### [Technical Field]

The present invention relates to a submarine device, a submarine cable system, a method for controlling a submarine device, and a program for a submarine device.

### [Background Art]

There is a submarine cable system in which a terminal device installed on land, a submarine device installed on seabed, and the like are connected to one another by a cable. The cable is laid over a long distance, and a total extension thereof sometimes reaches several thousand kilometers, for example. It is difficult to apply a constant voltage to a submarine device via the long-distance cable from a land power supply device installed on land. For this reason, a power supply method in which a constant current (hereinafter, written as "system current") is supplied to a submarine device via a power supply cable is adopted in the submarine cable system.

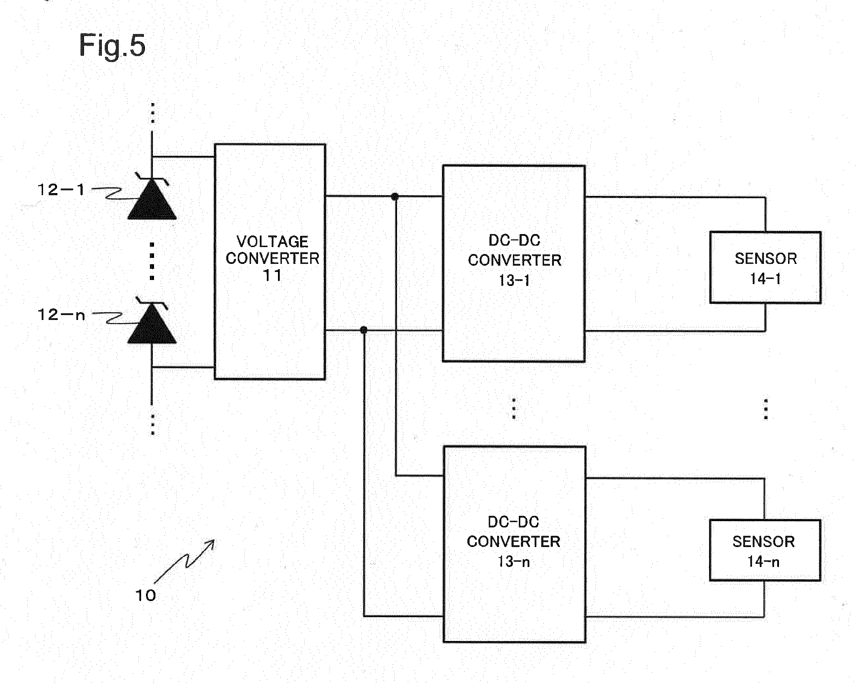

Fig. 5 is a block diagram illustrating an example of an internal configuration of a submarine device 10 related to the present invention. The submarine device 10 includes a voltage converter 11, n of Zener diodes 12-1 to 12-n, n of direct-current (DC)-DC converters 13-1 to 13-n, and n of sensors 14-1 to 14-n. Herein, in the voltage converter 11, n of Zener diodes 12 are connected on a primary side thereof, and DC-DC converters 13 are connected on a secondary side thereof. Note that in the voltage converter 11, electrical insulation is made between the primary side and the secondary side. Herein, n of the Zener diodes 12 are included in a power supply circuit (not illustrated) on the primary side in the voltage converter 11.

The submarine device 10 acquires a constant voltage by using a breakdown voltage caused by a Zener effect induced when voltage is applied between anodes and cathodes of the Zener diodes 12 provided in the power supply circuit. Herein, since a product acquired by multiplying the constant voltage by a system current flowing through n of the Zener diodes 12 corresponds to electric power consumption of the submarine device 10, the power supply circuit includes the series-connected Zener diodes 12 a number of which depends on power consumption of the submarine device 10. Then, the DC-DC converters 13 generate voltage required for respective constituent elements of the submarine device 10.

In order to utilize the submarine cable system for a system of observation such as earthquake monitoring, resource monitoring, and harbor monitoring, a wide variety of sensors are sometimes mounted in the sensors 14-1 to 14-n of the submarine device 10 as illustrated in Fig. 5, depending on purposes and uses. However, the sensors mounted in such a case often consume a larger quantity of electric power than existing constituent elements of the submarine device 10. Further, the sensors mounted in such a case are required to have a function of starting up and stopping an operation and a function of changing settings for various types of operations, according to remote control.

PTL 1 describes a submarine transmission system that applies a reverse bias voltage to a predetermined number of Zener diodes.

PTL 2 describes a balanced type of DC-constant-current-input/DC-constant-current-distribution-o utput device that compensates fluctuation in an external load by fluctuation in power consumption of a constant resistance circuit.

### [Citation List]

### [Patent Literature]

[PTL 1] Japanese Unexamined Patent Application Publication No. 2004-208287
[PTL 2] Japanese Unexamined Patent Application Publication No. 2011-135715

### [Summary of Invention]

### [Technical Problem]

The submarine cable system including the submarine device 10 is required to have flexibility capable of dealing with an extended demand for additional installation of a sensor. Accordingly, in the submarine cable system deployed in such an observation system described above, when a power supply load on the secondary side of the voltage converter 11 in the submarine device 10 fluctuates accompanying start-up, stop, additional installation, and the like of a sensor, a system current flowing through the Zener diodes 12-1 to 12-n on the primary side changes. Thus, there arises a problem that the constant voltage obtained by the Zener effect cannot be maintained. Specifically, for example, when a power supply load on the secondary side of the voltage converter 11 becomes small, current flowing on the primary side of the voltage converter 11 increases. Then, current flowing through the Zener diodes 12-1 to 12-n decreases. When current flowing through the Zener diodes 12-1 to 12-n becomes less than a preset Zener current, the constant voltage obtained by the Zener effect cannot be maintained.

In regard to such a problem, a countermeasure of fixing a power supply load in the submarine device 10 can be considered. However, this countermeasure impairs extensibility and flexibility of the submarine cable system, thereby making it difficult to utilize the submarine cable system for various observation uses.

Further, in regard to such a problem, it can be considered that there is a countermeasure of configuring the submarine device 10 in such a way as to previously enable application of a maximum power supply capacity that takes into account future additional installation or extension of a sensor. However, in this countermeasure, an electronic load needs to be previously provided in the submarine device 10, and the electronic load has to be operated at a light load until a sensor is additionally installed or extended, and thus, electric power is wastefully consumed. In addition, in this countermeasure, constituent elements in the submarine device 10 have to be operated in an environment where a temperature is raised by the light-load operation of the electronic load, and the like. Thus, in this countermeasure, there arises a problem of an increase in power consumption in the submarine device 10 and a decline in long-term reliability of the constituent elements of the submarine device 10. Furthermore, in this countermeasure, the submarine device 10 needs to have a complicated function of suppressing fluctuation in a power supply load of the submarine device 10 accompanying a change in an electronic load and in the number of sensors, and thus, the submarine device 10 is made large-sized and complicated. Therefore, in a manufacturing process, an inspection process, and a seabed laying process for the submarine device 10, working efficiency declines.

In the submarine transmission system described in PTL 1, since the number of Zener diodes that apply a reverse bias voltage is fixed, it is difficult to flexibly deal with fluctuation in power consumption in the submarine transmission system. Therefore, the submarine transmission system described in PTL 1 cannot acquire a constant voltage when a power supply load fluctuates.

Further, the balanced type of DC-constant-current-input/DC-constant-current-distribution-o utput device described in PTL 2 needs to be provided with a circuit including a constant resistance circuit, in order to prevent a change in passive electric power on an input side thereof. Thus, the balanced type of DC-constant-current-input/DC-constant-current-distribution-o utput device described in PTL 2 is made large-sized for obtaining a constant voltage.

The present invention has been made in view of the above-described problems, and aims at providing a submarine device, a submarine cable system, a method for controlling a submarine device, and a program for a submarine device, by which a constant voltage can be obtained regardless of fluctuation in a power supply load, without making a device large-sized and complicated.

### [Solution to Problem]

To achieve the above aim, a submarine device according to an aspect of the present invention comprises: drive voltage generation means for generating a voltage for driving connected loads, in response to flowing of current; detection means for detecting whether or not each of the loads is connected to the submarine device; and control means for, depending on a result detected by the detection means, performing control in such a way that the current flows or does not flow through the drive voltage generation means, wherein the drive voltage generation means are provided in association with the loads, respectively, the detection means detects whether or not each load is connected, and depending on a result detected by the detection means as to whether or not each load is connected, the control means performs control in such a way that the current flows or does not flow through each drive voltage generation means associated with each load.

To achieve the above aim, a method for controlling a submarine device according to an aspect of the present invention comprises: in response to flowing of current through drive voltage generation means provided respectively in association with connected loads, causing generation of voltage for driving the respective loads; detecting whether or not each load is connected to the submarine device; and depending on a result of detection as to whether or not each load is connected, performing control in such a way that the current flows or does not flow through each drive voltage generation means associated with each load.

To achieve the above aim, a program for a submarine device according to an aspect of the present invention causes a computer of a submarine device to perform: processing of, in response to flowing of current, causing voltage for driving respective connected loads to be generated by drive voltage generation means that are provided respectively in association with the loads; processing of detecting whether or not each load is connected to the submarine device; and processing of, depending on a result of detection as to whether or not each load is connected, performing control in such a way that the current flows or does not flow through each drive voltage generation means associated with each load.

### [Advantageous Effect of Invention]

According to the present invention, a constant voltage can be obtained regardless of fluctuation in a power supply load, without making a device large-sized and complicated.

### [Brief Description of Drawings]

Fig. 1 is a block diagram illustrating an example of an internal configuration of a submarine device according to a first example embodiment of the present invention;
Fig. 2 is a flowchart illustrating an operation example of the submarine device according to the first example embodiment of the present invention;
Fig. 3 is a block diagram illustrating a configuration example of a submarine device according to a second example embodiment of the present invention;
Fig. 4 is a flowchart illustrating an operation example of the submarine device according to the second example embodiment of the present invention; and
Fig. 5 is a block diagram illustrating an example of an internal configuration of a submarine device related to the present invention.

### [Example Embodiment]

### (First Example Embodiment)

A first example embodiment of the present invention is described with reference to the drawings.

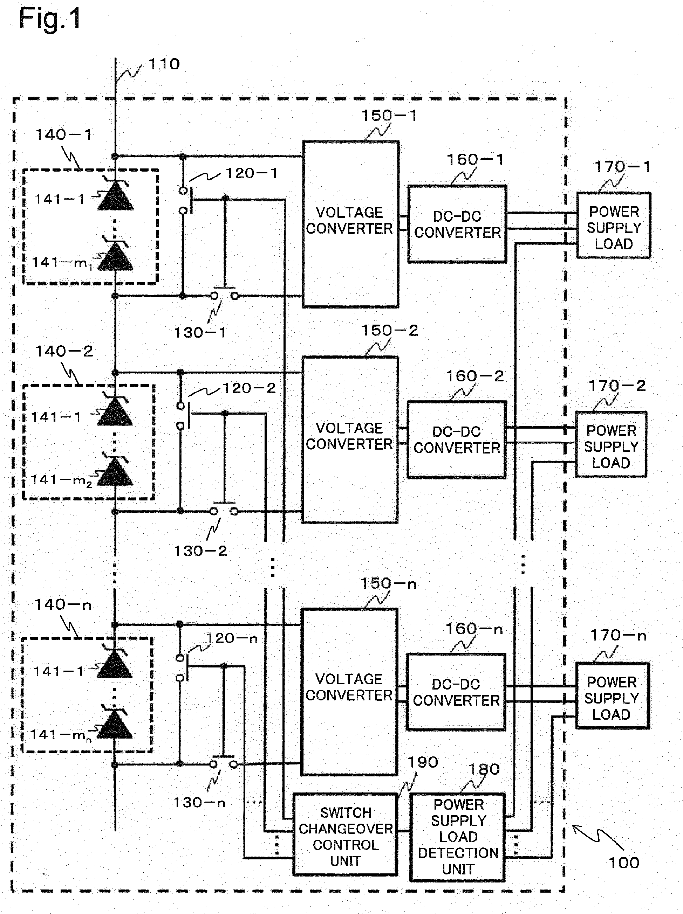

Fig. 1 is a block diagram illustrating a configuration example of a submarine device 100 according to the present example embodiment. In the example illustrated in Fig. 1, the submarine device 100 includes n of Zener diode groups 140-1 to 140-n, a power supply load detection unit 180, and a switch changeover control unit 190. Note that n of the Zener diode groups 140-1 to 140-n are respectively connected in series to each other. Each of n of the Zener diode groups 140-1 to 140-n is configured by m₁ to mₙ of Zener diodes connected respectively in series to each other. Specifically, the Zener diode group 140-1 is configured by Zener diodes 141-1 to 141-mi that are connected respectively in series to each other. The Zener diode group 140-2 is configured by Zener diodes 141-1 to 141-m₂ that are connected respectively in series to each other. The Zener diode group 140-n is configured by Zener diodes 141-1 to 141-mₙ that are connected respectively in series to each other.

Here, in the submarine device 100, a power supply cable 110 is arranged in such a way as to be connected to n of the Zener diode groups 140-1 to 140-n.

Further, n of voltage converters 150-1 to 150-n are respectively arranged in such a way as to be connected in parallel with n of the respective Zener diode groups 140-1 to 140-n. Note that n of the Zener diode groups 140-1 to 140-n are respectively connected on primary sides of n of the respective voltage converters 150-1 to 150-n.

Further, n of quantity switches 120-1 to 120-n are respectively arranged in such a way as to be connected in parallel with n of the respective Zener diode groups 140-1 to 140-n and n of the respective voltage converters 150-1 to 150-n. Note that n of the quantity switches 120-1 to 120-n are respectively connected on the primary sides of n of the respective voltage converters 150-1 to 150-n. In addition, n of the quantity switches 120-1 to 120-n are controllably connected to a switch changeover control unit 190, respectively.

Furthermore, n of route switches 130-1 to 130-n are respectively arranged between n of the respective Zener diode groups 140-1 to 140-n and the respective primary sides of n of the voltage converters 150-1 to 150-n. Note that n of the route switches 130-1 to 130-n are respectively connected in series to n of the respective Zener diode groups 140-1 to 140-n and n of the respective voltage converters 150-1 to 150-n. Further, n of the route switches 130-1 to 130-n are controllably connected to the switch changeover control unit 190, respectively.

Further, n of DC-DC converters 160-1 to 160-n are respectively arranged in such a way as to be connected on respective secondary sides of n of the voltage converters 150-1 to 150-n.

Furthermore, n of power supply loads 170-1 to 170-n are respectively arranged in such a way as to be connected to n of the respective DC-DC converters 160-1 to 160-n. Note that n of the power supply loads 170-1 to 170-n are also connected to a power supply load detection unit 180, respectively.

Here, n of the power supply loads 170-1 to 170-n may be arranged inside or outside the submarine device 100. In the example illustrated in Fig. 1, n of the power supply loads 170-1 to 170-n are arranged outside the submarine device 100.

In the following description, when n of the respective quantity switches 120-1 to 120-n do not need to be distinguished from each other to be described, the quantity switches 120-1 to 120-n are written as a quantity switch 120. Similarly, the route switches 130-1 to 130-n are written as a route switch 130. Further, the Zener diode groups 140-1 to 140-n are written as a Zener diode group 140. Then, m of the Zener diodes 141-1 to 141-m are written as a Zener diode 141. The voltage converters 150-1 to 150-n are written as a voltage converter 150. Furthermore, the DC-DC converters 160-1 to 160-n are written as a DC-DC converter 160. Then, the power supply loads 170-1 to 170-n are written as a power supply load 170.

The submarine device 100 is a device such as a submarine repeater constituting a submarine cable system. Here, in the submarine device 100, one Zener diode group 140 is associated with one quantity switch 120, one route switch 130, one voltage converter 150, one DC-DC converter 160, and one power supply load 170. Specifically, for example, the Zener diode group 140-1 is associated with the quantity switch 120-1, the route switch 130-1, the voltage converter 150-1, the DC-DC converter 160-1, and the power supply load 170-1.

A constant current (also referred to as system current) supplied from a land power supply device (not illustrated) installed on land is input to the submarine device 100 via the power supply cable 110.

The quantity switch 120 is switched mutually between being in an opened state and being in a closed state, in accordance with control of the switch changeover control unit 190.

The route switch 130 is switched mutually between being in an opened state and being in a closed state, in accordance with control of the switch changeover control unit 190. Note that the route switch 130 is switched to being in the opened state when the quantity switch 120 is switched to being in the closed state, and is switched to being in the closed state when the quantity switch 120-1 is switched to being in the opened state. Here, the quantity switch 120 and the route switch 130 are described later.

A system current flows through the Zener diode group 140 associated with the quantity switch 120 in the opened state and the route switch 130 in the closed state. Then, a predetermined constant voltage is applied to the Zener diode group 140 through which the system current flows, by use of a breakdown voltage caused by the Zener effect. For example, when the quantity switch 120-1 is in an opened state and the route switch 130-1 is in a closed state, a constant voltage is applied to the Zener diode group 140-1.

Here, the number of the Zener diodes 141 constituting the Zener diode group 140 is determined depending on voltage required for a primary side of the voltage converter 150. For example, when a voltage of 15 V is required for the primary side of the voltage converter 150-1, the Zener diode group 140-1 is constituted by three Zener diodes 141 each having a Zener voltage of 5 V.

The voltage converter 150 converts a voltage generated on the primary side, and applies the converted voltage to a secondary side thereof. Specifically, when the quantity switch 120 is switched to being in the opened state, the route switch 130 is switched to being in the closed state, and a system current flows through the Zener diode group 140, a voltage depending on the system current is applied to the primary side of the voltage converter 150. Then, the voltage is converted into a predetermined voltage and applied to the secondary side of the voltage converter 150. Then, the electric power is supplied to the secondary side of the voltage converter 150. The voltage converter 150 is implemented by a transformation system including a transformer, for example.

The DC-DC converter 160 converts, into an appropriate voltage depending on the power supply load 170, the voltage converted and applied by the voltage converter 150. Then, the DC-DC converter 160 applies the converted voltage to the power supply load 170.

The power supply load 170 is attached to the submarine device 100 via an underwater connector (not illustrated), depending on a purpose or a use of the submarine cable system. Further, the power supply load 170 is detached from the submarine device 100, depending on necessity. Note that after the submarine device 100 is installed on the seabed, the power supply load 170 is attached to the submarine device 100 or is detached from the submarine device 100 underwater via an underwater connector, depending on a demand for additional installation or extension of the submarine cable system, or the like. Here, the power supply load 170 is a sensor such as an accelerometer or a water pressure gauge, for example.

The power supply load detection unit 180 detects that the power supply load 170 is attached to and detached from the submarine device 100 (attachment and detachment). When detecting attachment or detachment of the power supply load 170, the power supply load detection unit 180 notifies the switch changeover control unit 190 of attachment or detachment of the power supply load 170.

When being notified of attachment or detachment of the power supply load 170 by the power supply load detection unit 180, the switch changeover control unit 190 controls states of the quantity switch 120 and the route switch 130, based on contents of the notification. Thereby, the Zener diode group 140 through which the system current flows is selected. Specifically, for example, when the power supply load 170-1 is attached to the submarine device 100, the switch changeover control unit 190 controls the quantity switch 120-1 in such a way as to be switched to being in the opened state, and controls the route switch 130-1 in such a way as to be switched to being in the closed state. Then, the system current flows through the Zener diode group 140-1, and thus, a constant voltage is applied to the Zener diode group 140-1. Accordingly, voltage is applied to the primary side of the voltage converter 150-1. Then, the electric power is supplied to the secondary side of the voltage converter 150-1. Further, for example, when the power supply load 170-1 is detached from the submarine device 100, the switch changeover control unit 190 controls the quantity switch 120-1 in such a way as to be switched to being in the closed state, and controls the route switch 130-1 in such a way as to be switched to being in an opened state. Then, the system current does not flow through the Zener diode group 140-1, and thus, a constant voltage is not applied to the Zener diode group 140-1. Accordingly, no voltage is applied to the primary side of the voltage converter 150-1. Then, electric power is not supplied to the secondary side of the voltage converter 150-1. Therefore, the switch changeover control unit 190 controls states of the quantity switch 120 and the route switch 130 in such a way that the system current flows through the Zener diode group 140 whose associated power supply load 170 is attached to the submarine device 100, and does not flow through the Zener diode group 140 whose associated power supply load 170 is not attached to the submarine device 100.

Note that the configuration is made in such a way as to control not only a state of the quantity switch 120 but also a state of the route switch 130 in order to select the Zener diode group 140 through which the system current flows, and thereby, a part of the system current can be prevented from flowing to the primary side of the voltage converter 150 when the quantity switch 120 is switched to being in a closed state.

Note that for example, when a configuration is made in such a way that the Zener diode group 140 through which the system current flows is selected only by control of a state of the quantity switch 120, a part of the system current flows to the primary side of the voltage converter 150 and a voltage is applied to the secondary side of the voltage converter 150 even when the quantity switch 120 is switched to being in a closed state accompanying detachment of the power supply load 170. Therefore, there arises a problem that electric power is unnecessarily consumed and the system current flowing on the primary side fluctuates, for example.

By comparison, as in the present example, according to the configuration of controlling not only a state of the quantity switch 120 but also a state of the route switch 130 in order to select the Zener diode group 140 through which the system current flows, the system current can be prevented from flowing to the primary side of the voltage converter 150 associated with the power supply load 170 when the power supply load 170 is detached, and thus, such a problem can be prevented from occurring.

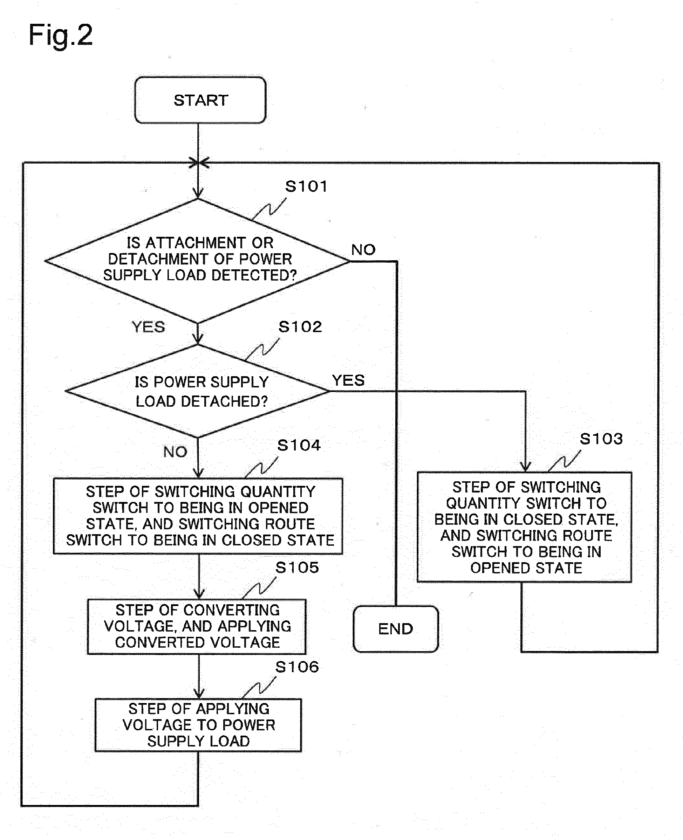

Next, an operation example of the submarine device 100 is described with reference to Fig. 2.

Fig. 2 is a flowchart illustrating a process for supplying an appropriate system current to the submarine device 100.

### (S101: Process at Power Supply Load Detection Unit 180)

When detecting that the power supply load 170 is detached from the submarine device 100 or that the power supply load 170 is attached to the submarine device 100 (yes at S101), the power supply load detection unit 180 notifies the switch changeover control unit 190 of the detected contents. Then, the process proceeds to S102. Meanwhile, when the power supply load detection unit 180 does not detect that the power supply load 170 is detached from the submarine device 100 and that the power supply load 170 is attached to the submarine device 100 (no at S101), the process for supplying an appropriate system current to the submarine device 100 is ended. Note that the process for supplying an appropriate system current to the submarine device 100 is performed at predetermined time intervals, for example.

### (S102: Process at Switch changeover Control Unit 190)

When being notified of attachment or detachment of the power supply load 170 by the power supply load detection unit 180 (yes at S101), the switch changeover control unit 190 performs the following process.

When the power supply load detection unit 180 notifies the switch changeover control unit 190 of detachment of the power supply load 170 from the submarine device 100 (yes at S102), the switch changeover control unit 190 proceeds to a step of S103. Meanwhile, when the power supply load detection unit 180 notifies the switch changeover control unit 190 of attachment of the power supply load 170 to the submarine device 100 (no at S102), the switch changeover control unit 190 proceeds to a step of S104.

### (S103: Process at Switch changeover Control Unit 190)

When being notified of detachment of the power supply load 170 from the submarine device 100 by the power supply load detection unit 180 (yes at S102), the switch changeover control unit 190 controls the quantity switch 120 in such a way as to be switched to being in a closed state, and controls the route switch 130 in such a way as to be switched to being in an opened state. Then, the system current can be prevented from flowing through the Zener diode group 140 associated with the detached power supply load 170. For example, when the power supply load 170-1 associated with the Zener diode group 140-1 is detached, the switch changeover control unit 190 controls the quantity switch 120-1 in such a way as to be switched to being in a closed state, and controls the route switch 130-1 in such a way as to be switched to being in an opened state. Then, the system current can be prevented from flowing through the Zener diode group 140-1.

Then, the process proceeds to a step of S101.

### (S104: Process at Switch changeover Control Unit 190)

When being notified of attachment of the power supply load 170 to the submarine device 100 by the power supply load detection unit 180 (no at S102), the switch changeover control unit 190 controls the quantity switch 120 in such a way as to be switched to being in an opened state, and controls the route switch 130 in such a way as to be switched to being in a closed state. Then, the system current can be made to flow through the Zener diode group 140 associated with the attached power supply load 170. For example, when the power supply load 170-1 associated with the Zener diode group 140-1 is attached, the switch changeover control unit 190 controls the quantity switch 120-1 in such a way as to be switched to being in an opened state, and controls the route switch 130-1 in such a way as to be switched to being in a closed state. Then, the system current can be made to flow through the Zener diode group 140-1.

### (S105: Process at Voltage Converter 150)

The voltage converter 150 converts a constant voltage applied to the primary side with the Zener diode group 140 being used, and applies the converted voltage to the secondary side.

### (S106: Process at DC-DC Converter 160)

The DC-DC converter 160 converts the voltage applied by the voltage converter 150, into an appropriate voltage depending on the power supply load 170. Then, the DC-DC converter 160 applies the converted voltage to the power supply load 170.

As described above, in the submarine device 100 according to the present example embodiment, when the power supply load 170 is attached, the switch changeover control unit 190 controls the quantity switch 120 and the route switch 130 in such a way that the system current flows through the Zener diode group 140 associated with the power supply load 170. Meanwhile, in the submarine device 100, when the power supply load 170 is detached from the submarine device 100, the switch changeover control unit 190 controls the quantity switch 120 and the route switch 130 in such a way that the system current does not flow through the Zener diode group 140 associated with the power supply load 170. In other words, in the submarine device 100, depending on attachment or detachment of the power supply load 170 (fluctuation in power consumption of the submarine device 100), the switch changeover control unit 190 appropriately changes the Zener diode group 140 through which the system current flows. With such a configuration, it is possible to prevent fluctuation in the system current caused by attachment and detachment of the power supply load 170. Therefore, application of a constant voltage to each of the Zener diode groups 140 can be maintained. Further, the submarine device 100 does not need to be provided with a circuit or the like including a constant resistance circuit for preventing fluctuation in the system current caused by attachment and detachment of the power supply load 170.

Thus, according to the present example embodiment, it is possible to obtain a constant voltage regardless of fluctuation in a power supply load without making a device large-sized and complicated.

### (Second Example Embodiment)

A second example embodiment of the present invention is described with reference to the drawings.

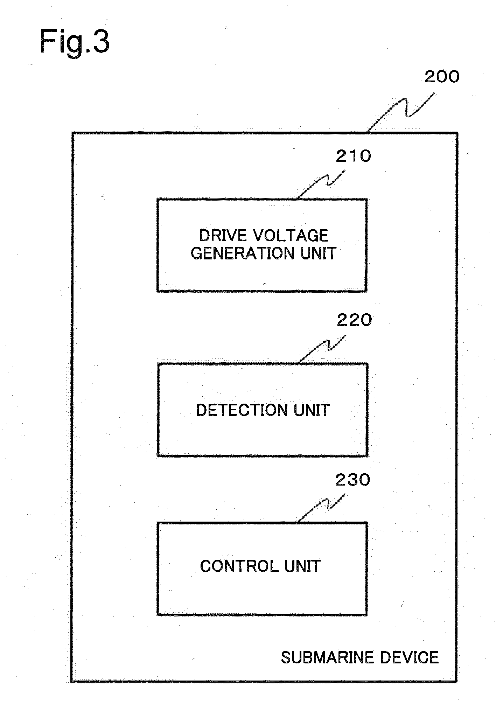

Fig. 3 is a block diagram illustrating a configuration example of a submarine device 200 according to the present example embodiment. In the example illustrated in Fig. 3, the submarine device 200 includes a drive voltage generation unit 210, a detection unit 220, and a control unit 230.

Here, the drive voltage generation unit 210 corresponds to the Zener diode group 140 in the first example embodiment of the present invention illustrated in Fig. 1, for example. Further, the detection unit 220 corresponds to the power supply load detection unit 180 in the first example embodiment of the present invention illustrated in Fig. 1, for example. Furthermore, the control unit 230 corresponds to the switch changeover control unit 190 in the first example embodiment of the present invention illustrated in Fig. 1, for example.

In response to flowing of current, the drive voltage generating unit 210 generates voltage for driving a connected load.

The detection unit 220 detects whether or not each of the loads is connected to the submarine device 200.

Depending on the detected result of the detection unit 220, the control unit 230 performs control in such a way that current flows or does not flow through the drive voltage generation unit 210.

Note that the drive voltage generation units 210 are prepared respectively depending on connected loads. Further, the detection unit 220 detects whether or not each of the loads is connected. Then, depending on the result detected by the detection unit 220 as to whether or not each of the loads is connected, the control unit 230 performs control in such a way that current flows or does not flow through each of the drive voltage generation units 210 depending on the respective loads.

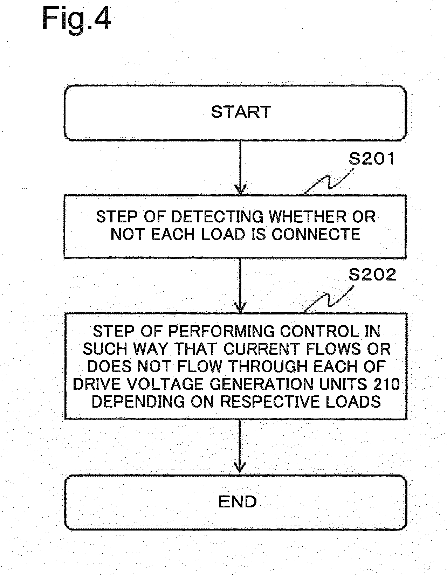

Next, an operation example of the submarine device 200 is described with reference to Fig. 4.

### (S201: Process at Detection Unit 220)

The detection unit 220 detects whether or not each of the loads is connected.

### (S202: Process at Control Unit 230)

Depending on the result detected by the detection unit 220 as to whether or not each of the loads is connected, the control unit 230 performs control in such a way that current flows or does not flow through each of the drive voltage generation units 210 depending on the respective loads.

According to the present example embodiment, the detection unit 220 detects whether or not each of the loads driven based on the voltage generated by the respective drive voltage generation units 210 is connected to the submarine device 200. Then, depending on the result detected by the detection unit 220 as to whether or not each load is connected, the control unit 230 performs control in such a way that current flows or does not flow through each of the drive voltage generation units 210 depending on the respective loads. With such a configuration, it is possible to prevent fluctuation in a constant current caused by connection and detachment of the loads. Further, the submarine device 200 does not need to be provided with a circuit or the like including a constant resistance circuit for preventing fluctuation in a system current caused by connection or detachment of the loads.

Thus, also in the present example embodiment, it is possible to achieve advantageous effects similar to those of the first example embodiment of the present invention.

Although the example embodiments of the present invention have been described above, the present invention is not limited to the above-described example embodiments, and further modifications, substitutions, and adjustments may be made without departing from the basic technical idea of the present invention. Further, the respective example embodiments may be appropriately combined to implement the present invention.

Note that respective pieces of the disclosure of PTLs described above are incorporated herein by reference. Within the entire disclosure (including claims) of the present invention, the example embodiments can be further modified and adjusted based on the basic technical idea thereof. Further, the various disclosed elements can be variously combined or selected within the scope of claims in the present invention. In other words, the present invention naturally encompasses various modifications and amendments that can be made by those skilled in the art in accordance with the entire disclosure including claims, and the technical idea.

Although the present invention has been described above with reference to the example embodiments, the invention of the present application is not limited to the above-described example embodiments. Various modifications that can be understood by those skilled in the art can be made on a configuration and details of the invention of the present application within the scope of the invention of the present application.

The present application claims priority based on Japanese Patent Application No. 2016-055019 filed on March 18, 2016, the disclosure of which is incorporated herein in its entirety.

### [Reference signs List]

- 10: Submarine device
- 11: Voltage converter
- 12-1 to 12-n: Zener diode
- 13: DC-DC converter
- 14-1 to 14-n: Sensor
- 100: Submarine device
- 110: Power supply cable
- 120-1 to 120-n: Quantity switch
- 130-1 to 130-n: Route switch
- 140-1 to 140-n: Zener diode group
- 141-1 to 141-m: Zener diode
- 150-1 to 150-n: Voltage converter
- 160-1 to 160-n: DC-DC converter
- 170-1 to 170-n: Power supply load
- 180: Power supply load detection unit
- 190: Switch changeover control unit
- 200: Submarine device
- 210: Drive voltage generation unit
- 220: Detection unit
- 230: Control unit

## Claims

1. A submarine device comprising:
drive voltage generation means for generating a voltage for driving connected loads, in response to flowing of current;
detection means for detecting whether or not each of the loads is connected to the submarine device; and
control means for, depending on a result detected by the detection means, performing control in such a way that the current flows or does not flow through the drive voltage generation means, wherein
the drive voltage generation means are provided in association with the loads, respectively,
the detection means detects whether or not each load is connected, and
depending on a result detected by the detection means as to whether or not each load is connected, the control means performs control in such a way that the current flows or does not flow through each drive voltage generation means associated with each load.

2. The submarine device according to Claim 1, further comprising:
transformation means that are provided in association with the respective drive voltage generation means, to which a voltage generated by the associated drive voltage generation means is input, and that transform the input voltage and apply the transformed voltage to a side of the load, wherein,
when performing control in such a way that the current flows through the associated drive voltage generation means, the control means performs control in such a way that the voltage is input to the transformation means.

3. The submarine device according to Claim 2, wherein,
when the detection means detects that the load is connected, the control means performs control in such a way that current flows through the drive voltage generation means associated with the load, and that the voltage is input to the transformation means associated with the drive voltage generation means.

4. The submarine device according to Claim 2 or 3, wherein,
when the detection means detects that the load is not connected, the control means performs control in such a way that current does not flow through the drive voltage generation means associated with the load, and that the voltage is not input to the transformation means associated with the drive voltage generation means.

5. The submarine device according to any one of Claims 1 to 4, wherein
the drive voltage generation means includes Zener diodes a number of which is associated with the load.

6. A submarine cable system comprising:
the submarine device according to any one of Claims 1 to 5; and
a power supply device that supplies the current to the submarine device.

7. A method for controlling a submarine device comprising:
in response to flowing of current through drive voltage generation means provided respectively in association with connected loads, causing generation of voltage for driving the respective loads;
detecting whether or not each load is connected to the submarine device; and
depending on a result of detection as to whether or not each load is connected, performing control in such a way that the current flows or does not flow through each drive voltage generation means associated with each load.

8. A storage medium storing a program for a submarine device, the program causing a computer of a submarine device to perform:
processing of, in response to flowing of current, causing voltage for driving respective connected loads to be generated by drive voltage generation means that are provided respectively in association with the loads;
processing of detecting whether or not each load is connected to the submarine device; and
processing of, depending on a result of detection as to whether or not each load is connected, performing control in such a way that the current flows or does not flow through each drive voltage generation means associated with each load.
